# EUROPÄISCHE PATENTSCHRIFT

(11) **EP 3 408 159 B1**
(45) Veröffentlichungstag und Bekanntmachung des Hinweises auf die Patenterteilung: **03.03.2021**
(21) Anmeldenummer: 17702311.6
(22) Anmeldetag: 19.01.2017
(51) Int. Cl.: B62D 1/184, B62D 1/185

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 26.01.2016 DE 102016201065
(43) Veröffentlichungstag der Anmeldung: 05.12.2018
(73) Patentinhaber: thyssenkrupp Presta AG, 9492 Eschen (LI); thyssenkrupp AG, 45143 Essen (DE)
(72) Erfinder: AGBOR, Thomas, 66424 Homburg (DE); GEISELBERGER, Thomas, 9008 St. Gallen (CH)
(74) Vertreter: thyssenkrupp Intellectual Property GmbH
(86) Internationale Anmeldenummer: PCT/EP2017/051027
(87) Internationale Veröffentlichungsnummer: WO 2017/129461

(56) Entgegenhaltungen:
- EP-A1- 2 611 673
- EP-A1- 2 855 237
- DE-A1- 19 945 164

## Beschreibung

### Stand der Technik

Die Erfindung betrifft eine Lenksäule für ein Kraftfahrzeug, umfassend
eine Stelleinheit mit einer in einem Mantelrohr um ihre Längsachse drehbar gelagerten Lenkspindel,
eine mit der Karosserie des Kraftfahrzeugs verbindbare Trageinheit, in der das Mantelrohr aufnehmbar ist und die zumindest eine dem Mantelrohr zugewandte Klemmfläche aufweist, und
eine Spanneinrichtung, die in Fixierstellung die Klemmfläche gegen das Mantelrohr mit einer Klemmkraft verspannt zur Fixierung der Stelleinheit relativ zur Trageinheit zumindest in Längsrichtung und die in Freigabestellung die Klemmfläche von dem Mantelrohr löst und eine Verstellung der Stelleinheit relativ zur Trageinheit zumindest in Längsrichtung freigibt, und die Trageinheit eine dem Mantelrohr zugewandte Gleitfläche aufweist, auf der in Freigabestellung das Mantelrohr in Längsrichtung entlangbewegbar ist,
wobei die Gleitfläche an einer Stützeinrichtung angeordnet ist, die die Gleitfläche mit einer unabhängig von der Klemmkraft vorgebbaren Stützkraft gegen das Mantelrohr andrückt.

Zur Anpassung der Lenkradposition an die Sitzposition des Fahrers eines Kraftfahrzeugs sind derartige Lenksäulen in unterschiedlichen Ausführungsformen im Stand der Technik bekannt. Zur Längenverstellung kann das am hinteren Ende der Lenkspindel angebrachte Lenkrad bei gattungsgemäßen Lenksäulen in Längsrichtung, d.h. in Richtung der Lenksäulen-Längsachse im Fahrzeuginnenraum positioniert werden.

Die Längenverstellbarkeit wird dadurch realisiert, dass die Stelleinheit, welche die in einem Mantelrohr drehbar gelagerte Lenkspindel umfasst, relativ zur Halte- oder Trageinheit, welche eine fest mit der Fahrzeugkarosserie verbundene Halterung der Lenksäule bereitstellt, in Längsrichtung teleskopartig verstellbar ist und mittels einer lösbaren Spanneinrichtung in unterschiedlichen Längspositionen feststellbar, d.h. lösbar fixierbar ist, bei welcher die Klemmkraft oder die Presskraft zwischen Trageinheit und Mantelrohr reduziert wird. Die Spanneinrichtung, auch als Feststelleinrichtung bezeichnet, wirkt auf die von der Halteeinheit gehaltene Stelleinheit, wobei in geöffnetem Zustand der Spanneinrichtung - auch als Freigabestellung oder Löseposition bezeichnet - eine Verschiebung der Stelleinheit gegenüber der Halteeinheit in Längsrichtung zur Einstellung der Lenkradposition möglich ist und in geschlossenem Zustand - Fixierstellung oder Feststellposition genannt - die Stelleinheit mit der Halteeinheit verspannt ist und im normalen Fahrbetrieb die Lenkradposition unter den zu erwartenden mechanischen Beanspruchungen fixiert ist.

Eine Spanneinrichtung, wie beispielsweise in der DE 10 2008 060 225 A1 beschrieben, umfasst ein Spanngetriebe mit einem Betätigungselement, beispielsweise einer Spannachse, welches über einen manuell verstellbaren Bedienhebel oder eine elektromotorische Stelleinrichtung antreibbar ist. Durch das Spanngetriebe kann beispielsweise eine Drehbewegung der Spannachse in einen quer zur Längsachse gerichteten Klemmhub der Klemmfläche umgesetzt werden, so dass in Querrichtung eine Klemmkraft auf die Trageinheit ausgeübt wird. Dabei wird zumindest eine an der Trageinheit ausgebildete Klemmfläche reibschlüssig gegen die Außenseite des Mantelrohrs angepresst, so dass die Stelleinheit kraftschlüssig mit der Trageinheit verspannt ist, vergleichbar mit der Funktion einer Klemmschelle. Durch umgekehrte Betätigung des Betätigungselements kann die Spanneinrichtung in Freigabestellung, auch Lösestellung genannt, gebracht werden, wobei die Klemmkraft entspannt und dadurch der Kraftschluss gelöst wird.

Damit das Mantelrohr in der Freigabestellung beim Verstellen der Stelleinheit aufgrund von Spiel zwischen der Außenseite des Mantelrohrs und der Klemmfläche nicht in der Halteeinheit verkippen kann und unerwünschte Klappergeräusche oder ein als unangenehm empfundenes Bediengefühl auftreten, ist in der DE 10 2010 037 312 B2 vorgeschlagen worden, das Mantelrohr relativ zur Halteeinheit längsverschieblich auf Gleitflächen an der Trageinheit zu lagern, die separat von den Klemmflächen ausgebildet sind und möglichst spielfrei eingestellt an der Außenseite des Mantelrohrs anliegen. Dadurch kann ein Verkippen reduziert und das Bediengefühl beim Verstellen der Lenkradposition verbessert werden. Die DE 10 2010 037 312 B2 wird als nächstliegender Stand der Technik angesehen und zeigt den Oberbegriff des unabhängigen Anspruchs.

Beim Verstellen können jedoch zwischen den Klemm- bzw. Gleitflächen und dem Mantelrohr auftretende Stick-slip- bzw. Sprag-slip-Effekte zwischen den gegeneinander anliegenden Oberflächen das gewünschte gleichmäßige Gleitverhalten beeinträchtigen.

Angesichts der vorangehend erläuterten Problematik ist es eine Aufgabe der vorliegenden Erfindung, eine Lenksäule mit einer verbesserten Verstellbarkeit und verringerter Geräuschentwicklung zur Verfügung zu stellen.

### Darstellung der Erfindung

Zur Lösung der vorgenannten Problematik wird erfindungsgemäß vorgeschlagen, dass die Stützkraft im Wesentlichen größer oder gleich ist der auf die Gleitfläche ausgeübten Komponente der Gewichtskraft der Stelleinheit einschließlich daran angebrachter Anbauteile.

Bei der Erfindung ist es vorteilhaft, dass die Stützkraft größer oder gleich ist der auf die Gleitfläche ausgeübten Komponente der Gewichtskraft der Stelleinheit einschließlich daran angebrachter Anbauteile. Die Gewichtskraft von an der beweglichen Stelleinheit angebrachten Anbauteilen wie insbesondere dem Lenkrad und dem Lenkstockschalter addiert sich zu der Gewichtskraft, die über die Außenseite des Mantelrohrs auf die Gleitfläche ausgeübt wird. Dadurch, dass die Stützkraft mindestens so groß vorgegeben wird, dass sie die gesamte auf sie einwirkende Gewichtskraft kompensieren kann, wird das Mantelrohr beim Lösen der Spanneinrichtung auf der Gleitfläche in Position gehalten, wenn die Klemmfläche aus dem Klemmeingriff gebracht wird. Während im Stand der Technik aufgrund der wirkenden Gewichtskraft die Stelleinheit beim Lösen der Spanneinrichtung in der Trageinheit verkippen kann und selbst geringes Spiel beim Verstellen zu unerwünschten Klappergeräuschen führen kann, wird dies durch den erfindungsgemäßen Wechsel von der Klemmebene auf die Gleitebene weitgehend vermieden. Weiterhin ist es denkbar und möglich, dass die Stützkraft kleiner der auf sie einwirkenden Gewichtskraft ist. Dabei kommt es zur Kräfteverteilung zwischen der den Klemmflächen der Trageinheit und dem Mantelrohr.

In einer bevorzugten Ausführungsform der Erfindung umfasst die Spanneinrichtung ein Betätigungselement, welches mit einem Spanngetriebe zusammenwirkt, welches eine Betätigung des Betätigungselements von der Freigabestellung in die Fixierstellung in eine quer zur Längsachse gerichtete, auf die Klemmfläche wirkende Klemmkraft zur Verspannung der Trageinheit mit dem Mantelrohr umsetzt.

Erfindungsgemäß ist die Gleitfläche separat von der Klemmfläche ausgebildet und wird unabhängig von der Klemmfläche mit der Außenseite des Mantelrohrs in Kontakt gebracht. Hierzu dient eine Stützeinrichtung, die eine Stützkraft erzeugt, welche an der an der Trageinheit abgestützt wird und gleichzeitig dafür sorgt, dass die Gleitfläche zur Bereitstellung eines Gleitkontakts definiert gegen die Außenseite des Mantelrohrs angedrückt wird. Dadurch, dass die von der Stützeinrichtung bereitgestellte Stützkraft unabhängig von der durch die Spanneinrichtung bereitgestellten Klemmkraft vorgegeben werden kann, ist es entsprechend möglich, die beim Verstellen der Lenksäule auftretenden Reibungskräfte zwischen Gleitfläche und einer Außenseite, also einer äußeren Mantelfläche des Mantelrohrs unabhängig von der Klemmkraft einzustellen. Die Einstellung der Reibungskräfte zwischen der Außenseite des Mantelrohrs und der Gleitfläche, welche Haft- und Gleitreibungskräfte umfasst, erfolgt erfindungsgemäß durch Einstellung der von der Stützeinrichtung über die Gleitfläche auf das Mantelrohr ausgeübten Andruckkraft, nämlich der Stützkraft.

Ein Vorteil gegenüber bekannten Vorrichtungen zur Einstellung des Spiels ist, dass nicht ein Abstand zwischen Mantelrohr und Gleitfläche vorgegeben wird, sondern eine definierte Andruckkraft, und damit auch eine definierte Reibungskraft bezüglich einer relativen Verschiebung von Mantelrohr und Trageinheit. Dadurch ist es möglich, die zur Verstellung erforderliche Betätigungskraft zu vergleichmäßigen.

Die Gleitfläche ist bevorzugt an einem Gleitkörper ausgebildet, der zum Mantelrohr hin und entgegen dazu bewegbar gelagert ist. Die Lagerung ermöglicht einerseits eine Bewegung des Gleitkörpers auf die Außenseite des Mantelrohrs zu, wobei durch die erfindungsgemäße Stützeinrichtung die Gleitfläche mit einer definierten Stützkraft gegen das Mantelrohr angedrückt wird, um eine vorbestimmte Reibungskraft bereitzustellen. Andererseits ist es möglich, dass eine von dem Mantelrohr eine der Stützkraft entgegen gerichtete Gegenkraft in die Stützeinrichtung eingeleitet wird. Dadurch kann an der Gleitfläche ein Kräftegleichgewicht der Stützkraft mit den tatsächlich auf die Stelleinheit wirkenden Kräften eingestellt werden. Die Bewegbarkeit kann beispielsweise durch eine Linearführung des Gleitkörpers quer zur Außenfläche des Mantelrohrs, oder auch durch Schwenklager oder dergleichen bewerkstelligt werden.

Die Stützeinrichtung kann ein Federelement und/oder einen Aktuator aufweisen. Das Federelement bzw. der Aktuator bildet ein Krafterzeugungselement, welches die Trageinheit als Widerlager nutzt und relativ dazu auf den Gleitkörper die gegen das Mantelrohr gerichtete Stützkraft ausübt, mit der die Gleitfläche gegen die Außenseite des Mantelrohrs angedrückt wird. Bei einem Federelement ist dies die Vorspannung aufgrund der wirkenden Federkraft. Aufgrund seiner elastischen Kennlinie ist ein Federelement gut geeignet, die erforderliche Stützkraft aufrecht zu erhalten und Schwankungen elastisch aufzufangen, die beispielsweise durch im Betrieb auftretende Beschleunigungs- bzw. Trägheitskräfte auftreten können. Als Federelement kann beispielsweise eine Druckfeder eingesetzt werden, die als Standard-Bauelement mit den geforderten Eigenschaften kostengünstig bereitgestellt werden kann und einen zuverlässigen und wartungsarmen Dauerbetrieb ermöglicht. Alternativ - oder gegebenenfalls zusätzlich kann ein aktiver Aktuator vorgesehen sein, um den Gleitkörper mit einer definierten Stützkraft zu belasten, beispielsweise ein elektrischer oder elektro-magnetischer Krafterzeuger. Dieser ermöglicht eine aktive Einstellung und eine Regelung der Stützkraft, um die Reibungskraft gezielt einzustellen, oder die Reibungskraft unter wechselnden Betriebsbedingungen konstant zu halten.

Eine vorteilhafte Ausführung der Erfindung sieht vor, dass der Gleitkörper in einer zum Mantelrohr hin offenen Ausnehmung in der Trageinheit angeordnet ist. Die Ausnehmung kann beispielsweise in der Innenseite der Aufnahme für das Mantelrohr als Nut, Sicke oder Sackbohrung ausgebildet sein, in die der Gleitkörper so eingesetzt ist, das seine Gleitfläche sich in dem offenen Öffnungsquerschnitt erstreckt. Die zwischen dem Gleitkörper und der Trageinheit eingesetzte Stützeinrichtung, beispielsweise eine Druckfeder, stützt sich am geschlossenen Grund der Ausnehmung, beispielsweise am Boden der Nut oder Sicke ab, wobei die auf die Gleitfläche ausgeübte Stützkraft bezüglich der Öffnung der Ausnehmung nach außen gerichtet ist. Damit kann die Ausnehmung die Führung des Gleitkörpers relativ zur Außenseite des Mantelrohrs übernehmen und dient der Stützeinrichtung als Widerlager an der Trageinheit. Schließlich begrenzt die Ausnehmung durch ihre Tiefe die mögliche Bewegung des Gleitkörpers von dem Mantelrohr gesehen nach außen. Die Ausnehmung kann vorzugsweise einstückig in der Trageinheit ausgebildet sein, beispielsweise als plastisch eingeformte Einpressung, was fertigungstechnisch günstig herstellbar ist.

Es ist möglich, dass die Ausnehmung im Bereich einer Klemmfläche angeordnet ist oder benachbart dazu. Dadurch kann die Stützkraft eine gemeinsame Kraftkomponente mit der Klemmkraft haben, d.h. die Klemmkraft wirkt im fixierten Zustand teilweise gegen die Stützkraft. Es ist gleichfalls möglich, die Ausnehmung derart mit Abstand zu einer Klemmfläche anzuordnen, so dass die Klemmkraft und die Stützkraft quer zueinander stehen und - bei senkrechter Anordnung - keine gemeinsame Kraftkomponente haben und infolge dessen unabhängig voneinander auf das Mantelrohr einwirken können.

Eine vorteilhafte Ausführung der Erfindung sieht vor, dass die Gleitfläche relativ zum Mantelrohr in der Trageinheit flächenbündig versenkbar ist. Eine flächenbündig versenkte Anordnung kann beispielsweise dadurch erreicht werden, dass die Gleitfläche an einem Gleitkörper angeordnet ist, der von dem Mantelrohr nach außen gerichtet so tief in eine Ausnehmung in der Trageinrichtung eingesetzt bzw. eingeführt werden kann, bis die Gleitfläche sich in der Ebene des freien Öffnungsquerschnitts befindet. Mit anderen Worten steht die Gleitfläche nicht mehr aus der Trageinheit gegen das Mantelrohr vor, so dass das Mantelrohr nicht mehr allein auf der Gleitfläche entlanggleiten kann, sondern zumindest gleichzeitig mit seiner Außenfläche in zumindest einem Bereich neben der Gleitfläche mit der Trageinheit in Kontakt kommt, beispielsweise einer Klemmfläche.

Eine besondere Funktionalität lässt sich bei der vorgenannten versenkbaren Anordnung dadurch erreichen, dass die Gleitfläche innerhalb oder benachbart zu einer Klemmfläche angeordnet ist. Dadurch wirkt in der Fixierstellung zumindest eine Teilkomponente der von der Spanneinrichtung in Richtung der Klemmfläche ausgeübten Klemmkraft über die Gleitfläche auf den Gleitkörper der Stützkraft entgegen. Dadurch, dass die gegen die Gleitfläche gerichtete Komponente der Klemmkraft größer ist als die Stützkraft, wird der Stützkörper so weit in eine Ausnehmung zurückgedrängt, dass die Klemmfläche in dem die Gleitfläche umgebenden bzw. der Gleitfläche benachbarten Bereich an dem Mantelrohr kraft- bzw. reibschlüssig anliegt. Wird nun die Spanneinrichtung gelöst, d.h. in die Freigabestellung gebracht, wird die Klemmkraft reduziert und die Gleitfläche wird mit der Stützkraft gegen das Mantelrohr angedrückt. Dadurch kann - durch entsprechende Vorgabe der Stützkraft - die Gleitfläche aus der versenkten Position relativ zur Klemmfläche hervortreten und ein Klappern bei der Bewegung des Mantelrohrs relativ zur Trageinheit vermieden werden. In dieser vorstehenden Gleitposition hat das Mantelrohr mit seiner Außenseite folglich weniger oder keinen Kontakt mehr mit der Klemmfläche, sondern nur noch mit der Gleitfläche. Dadurch kann ein definiertes und gleichmäßiges Gleitverhalten des Mantelrohrs in der Trageinheit zur Verstellung der Lenksäule in der Freigabeposition der Spanneinrichtung vorgegeben werden. Wird die Lenksäule wieder fixiert, wird der Gleitkörper durch die auf das Mantelrohr ausgeübte Klemmkraft bewegt, bis er in der Trageinheit versenkt ist und die Klemmfläche in reibschlüssigen Eingriff kommt. Dadurch wird relativ zur Trageinheit jeweils eine unterschiedliche Klemm- bzw. Gleitebene eingeschaltet. Dadurch kann ein gleichmäßiges, leichtes Gleiten bei der Verstellung der Lenksäule unabhängig von einer zuverlässig hohen Haltekraft durch eine reibschlüssige Verspannung der Klemmfläche mit der Manteleinheit erreicht werden.

Durch die Anordnung der Gleitfläche innerhalb der oder benachbart zur Klemmfläche kann ein besonders kompakter, funktionssicherer Aufbau realisiert werden.

Weiterhin ist es vorteilhaft, dass die von der Stützeinrichtung auf die Gleitfläche ausgeübte Stützkraft gegen die Richtung einer Gewichtskraft weist und damit gegen die Schwerkraftrichtung. Dabei wird die Gleitfläche bzw. der die Gleitfläche aufweisende Gleitkörper in der Trageinheit unterhalb des Mantelrohrs angeordnet. Die Stützkraft wirkt gegen die durch die Schwerkraft verursachte Gewichtskraft der Stelleinheit nach oben und drückt die Gleitfläche von unten gegen das Mantelrohr an.

Es ist weiterhin vorteilhaft, dass die Gleitfläche reibungsmindernd und/oder die Klemmfläche reibungserhöhend ausgestaltet ist bezüglich Reibung auf dem Mantelrohr. Dadurch kann erreicht werden, dass das Mantelrohr zur Verstellung der Lenksäule in Freigabestellung der Spanneinrichtung leicht und gleichmäßig in Längsrichtung der Längsachse auf der Gleitfläche entlanggleiten kann, und in Fixierstellung der Spanneinrichtung die Klemmfläche sicher mit der Trageinheit kraftschlüssig verspannt ist.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine Ansicht in Längsrichtung auf die Lenksäule gemäß Figur 1,
- Figur 3: eine Detailansicht aus Figur 2,
- Figur 4: eine perspektivische Ansicht der Trageinheit der Lenksäule gemäß Figur 1 mit der darin eingesetzten Stelleinheit ,
- Figur 5: eine auseinander gezogene Ansicht der Trageinheit und der Stelleinheit aus Figur 4,

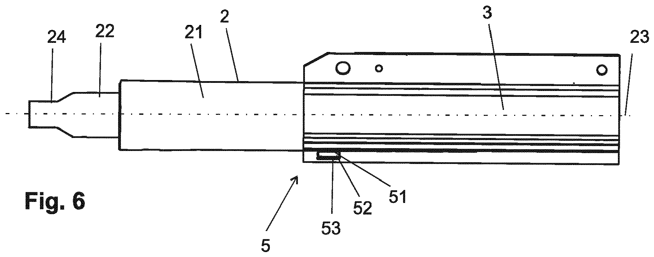

- Figur 6: eine Seitenansicht der Trageinheit mit Stelleinheit gemäß Figur 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

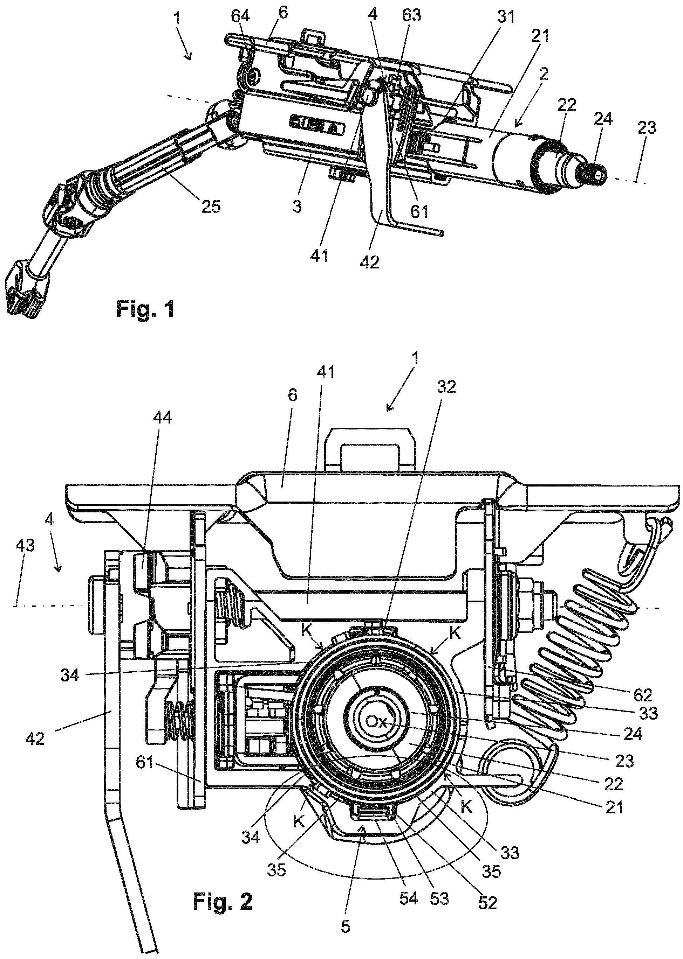

Figur 1 zeigt eine perspektivische Ansicht einer Lenksäule 1, die eine Stelleinheit 2 mit einem Mantelrohr 21 umfasst, in dem eine Lenkspindel 22 um die Längsachse 23 drehbar gelagert ist. An einem bezüglich der Fahrtrichtung hinteren Befestigungsabschnitt 24 kann ein nicht dargestelltes Lenkrad befestigt werden. Die Lenkspindel 22 erstreckt sich von dem Befestigungsabschnitt 24 aus gesehen nach vorn durch die Stelleinheit 2 hindurch zur Lenkgetriebeseite, wo eine Ausgangswelle 25 angeschlossen ist, die mit einem nicht dargestellten Lenkgetriebe verbunden ist.

Die Stelleinheit 2 ist in einer Halteeinheit 3 aufgenommen, wobei das Mantelrohr 21 in einer koaxial zur Längsachse 23 durchgehenden Aufnahmeöffnung 31 angeordnet ist. Die Aufnahmeöffnung 31 hat einen in der Grundform zylindrischen Durchgangsquerschnitt, der an die zylindrische Außenform des Mantelrohrs 21 angepasst ist.

Die Halteeinheit 3 weist einen längs in Richtung der Längsachse 23 durchgehenden Schlitz 32 in der Wandung der Aufnahmeöffnung 31 auf, der deutlich in der axialen Ansicht nach vorn auf den Befestigungabschnitt 24 in Figur 2 erkennbar ist. In Umfangsrichtung erstrecken sich durch den Schlitz 32 getrennte Wandungsabschnitte 33 und 34 der Aufnahmeöffnung 31.

Eine Spanneinrichtung 4 umfasst eine quer zur Längsachse 23 und damit quer zum Schlitz 32 an der Halteeinheit 3 angeordnete Spannachse 41, welche den Schlitz 32 überbrückend an den Wandungsabschnitten 33 und 34 angreift. An der Spannachse 41 ist als Betätigungselement ein manuell bedienbarer Betätigungshebel 42 angebracht, mit dem die Spannachse 41 um ihre Drehachse 43 verschwenkt werden kann. Über ein Spanngetriebe 44, beispielsweise mit axial gegeneinander anliegenden Nocken- oder Keilscheiben, Kippstiften oder dergleichen wird eine Drehbewegung der Spannachse 41 in einen Klemmhub umgesetzt, der die Wandungsabschnitte 33 und 34 entlang des Schlitzes 32 gegeneinander zusammenzieht, mit anderen Worten eine Verkleinerung der Schlitzbreite des Schlitzes 32 bewirkt.

Wird die Spanneinrichtung 4 durch Verschwenken des Betätigungshebels 42 geschlossen, werden die Wandungsabschnitte 33 und 34 gegeneinander bewegt, so dass die Klemmfläche 35 auf der Innenfläche der Aufnahmeöffnung 31 gegen die Außenfläche des dazwischen befindlichen Mantelrohrs 21 angepresst wird. Dadurch wird die Fixierstellung eingestellt, in der die zylindermantelförmige Klemmfläche 35 über ihren gesamten Umfang radial gegen die zylindermantelförmige Außenfläche des Mantelrohr 21 angepresst wird. Dabei wirkt zwischen den gegeneinander anliegenden Flächen die Klemmkraft K, die in Figur 2 mit mehreren über den Umfang verteilten Kraftpfeilen angedeutet ist. Durch die Klemmkraft K ist das Mantelrohr 21 auf seiner Außenfläche reibschlüssig über die auf der Innensite der Aufnahmeöffnung 31 ausgebildete Klemmfläche 35 mit der Halteeinheit verbunden. Dadurch ist die Stelleinheit 2 mit der Halteeinheit 3 verspannt und bezüglich einer Verschiebung in Richtung der Längsachse 23 fixiert. Entsprechend ist die Lenkradposition fixiert.

Durch Verschwenken des Betätigungshebels 42 in die entgegengesetzte Richtung wird die Spanneinrichtung in die Freigabestellung gebracht, d.h. geöffnet. Dabei werden die Wandungsabschnitte 33 und 34 nicht mehr gegeneinander zusammengepresst, wodurch keine Klemmkraft K mehr zwischen der Klemmfläche 35 und der Außenfläche des Mantelrohrs 21 anliegt. Durch den Wegfall der reibschlüssigen Verbindung kann das Mantelrohr 21 nunmehr zur Einstellung der Lenkradposition in oder entgegen der Richtung der Längsachse 23 relativ zur Halteeinheit innerhalb der Aufnahmeöffnung axial verschoben werden.

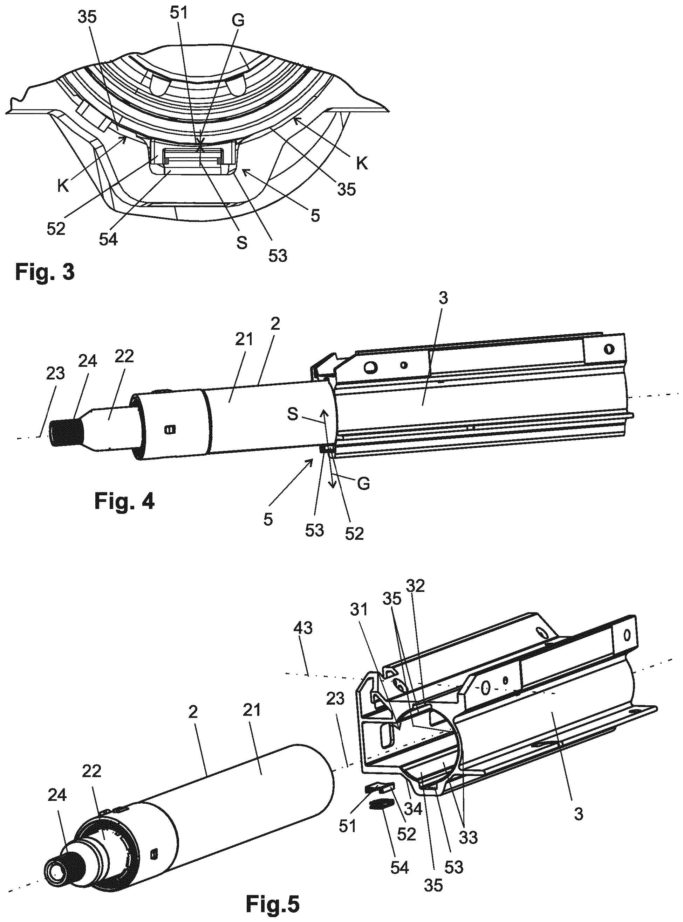

Im bezüglich der Schwerkraftrichtung unteren Bereich, hier auf der dem Schlitz 32 gegenüberliegenden Seite der Aufnahmeöffnung 31 der Halteeinheit 3, ist eine Stützeinrichtung 5 angeordnet. Diese umfasst eine in der Aufnahmeöffnung 31 angeordnete Gleitfläche 51, welche dem Mantelrohr 21 zugewandt ist und an der Außenseite des Mantelrohrs 21 anliegt. Die Gleitfläche 51 ist an einem Gleitkörper 52 ausgebildet, der in einer Ausnehmung 53 in der Innenfläche der Aufnahmeöffnung 31 angeordnet ist. Wie in der vergrößerten Detaildarstellung von Figur 3 erkennbar ist, befindet sich die Ausnehmung 53 in Umfangsrichtung zwischen Abschnitten der Klemmfläche 35, so dass sich die im zum Mantelrohr 21 hin offenen Öffnungsquerschnitt der Ausnehmung 53 erstreckende Gleitfläche 51 ebenfalls von der Klemmfläche 35 begrenzt wird, oder anders ausgedrückt sich innerhalb der Klemmfläche 35 befindet.

Die Tiefe der Ausnehmung 53, in radialer Richtung von der Längsachse 23 aus gemessen, ist größer oder zumindest gleich der Abmessung des Gleitkörpers 52 in dieser Richtung. Dadurch kann der Gleitkörper 52 so tief in die Ausnehmung 53 eingesetzt werden, dass die Gleitfläche 51 zumindest flächenbündig darin versenkt ist. Dadurch kann das Mantelrohr 21 in Fixierstellung mit seiner zylindrischen Außenfläche in den Bereichen der Klemmfläche 35, die der Ausnehmung 53 benachbart sind, reibschlüssig anliegen, wobei der Gleitkörper 52 vollständig in die Klemmfläche 35 zurückgedrängt ist, d.h. die Gleitfläche 51 nicht gegen das Mantelrohr 21 gerichtet über die Klemmfläche 35 vorsteht.

In der Ausnehmung 53 ist ein Federelement 54 angeordnet, welches derart gegen den Gleitkörper 52 vorgespannt ist, dass es die Gleitfläche 51 mit einer Stützkraft S gegen die Außenfläche des Mantelrohrs 21 andrückt. Das Federelement 54 ist im dargestellten Beispiel in Form eines bügelförmig umgebogenen Federstahl-Blechformteils ausgestaltet.

Figur 3 zeigt die Lenksäule 1 in Freigabestellung, in der die Spanneinrichtung 4 geöffnet ist und entsprechend keine Klemmkraft von der Klemmfläche 35 auf die Außenfläche des Mantelrohrs 21 ausgeübt wird. Aufgrund der Schwerkraft, die nach unten gerichtet ist, lastet das Mantelrohr 21 mit einer Kraftkomponente G seiner Gewichtskraft, die abhängig ist von der Neigung der Lenksäule 1 und den an der Stelleinheit 2 angebrachten Anbauteilen wie Lenkrad, Lenkstockschalter und dergleichen, auf der Gleitfläche 51.

Das Federelement 54 stützt sich am Grund der Ausnehmung 53 gegen die Stelleinheit 3 ab und übt über die Gleitfläche 51 die Stützkraft S auf die untere Außenfläche des Mantelrohrs 21 aus. Dadurch, dass der Betrag der Stützkraft S größer oder zumindest gleich der in Richtung der von dem Mantelrohr 21 auf die Gleitfläche 51 wirkenden Kraftkomponente der Gewichtskraft G ist, wird das Mantelrohr 21 und damit die Stelleinheit 2 innerhalb der Aufnahmeöffnung 31 parallel zur Längsachse 23 gehalten. Der Betrag der Stützkraft S kann auch kleiner als die Kraftkomponente der Gewichtskraft G sein. Durch eine Kräfteverteilung zwischen den Reibungspartnern, und zwar zwischen den Klemmflächen 35 und dem Mantelrohr 21, wird das Mantelrohr 21 innerhalb der Aufnahmeöffnung 31 parallel zur Längsachse 23 gehalten. Insbesondere wenn sich in dem entspannten Zustand der Freigabestellung das Mantelrohr 21 aufgrund der Elastizität des Materials und der über das Mantelrohr 21 übertragenen Kraftkomponente G geringfügig aufgeweitet wird und Spiel zwischen der Klemmfläche 35 und der Außenfläche des Mantelrohrs 21 auftritt, kann das Mantelrohr 21 in geringerem Umfange relativ zur Halteeinheit verkippen. Dabei wird das Mantelrohr 21 durch die Stützeinrichtung 5 von der Klemmfläche 35 gegen die Schwerkraft abgehoben und ist dann auf der Gleitfläche 51 gelagert. Dadurch kann die Stelleinheit 2 in Richtung der Längsachse 23 leichtgängig zur Einstellung der Lenkradposition vor oder zurück verschoben werden. Um die Reibung beim Verstellen zu verringern, kann die Gleitfläche 51 beispielsweise mit einer reibungsmindernden Gleitbeschichtung versehen sein.

Wird die Spanneinrichtung 4 in die Fixierstellung gebracht, werden die Außenfläche des Mantelrohrs 21 und die Klemmfläche 35 mit der Klemmkraft K gegeneinander angedrückt, wie dies ebenfalls in Figur 3 eingezeichnet ist. Entsprechend wird über die Gleitfläche 51 der Gleitkörper 52 von der Klemmkraft K, die größer ist als die Stützkraft S, so tief in die Ausnehmung 53 hinein bewegt, bis die Gleitfläche 51 flächenbündig in der Trageinheit 2 versenkt ist und die Klemmfläche 35 reibschlüssig an dem Mantelrohr 21 anliegt.

Durch die erfindungsgemäße Stützeinrichtung 5, die über die Gleitfläche 51 die effektive Kraftkomponente G der Stelleinheit 2 einschließlich daran verbauter Anbauteile abfangen kann, werden in der Freigabestellung störende Stick-slip- und Sprag-slip-Effekte zwischen dem Mantelrohr 21 und der Klemmfläche 35 reduziert.

Figuren 4 und 5 zeigen die Stelleinheit 2 und die Halteeinheit 3 noch einmal separat in zusammengebautem und auseinander gezogenem Zustand. Darin ist der kreisrunde, zylindrische Querschnitt von Mantelrohr 21 und Aufnahmeöffnung 31 gut erkennbar. Beispielhaft sind in Figur 4 die vorgenannten Kraftkomponenten G und S eingezeichnet. Insbesondere Figur 5 zeigt deutlich die Ausbildung der Ausnehmung 53 als axial über die Längserstreckung der Halteeinheit 3 durchgehende Nut oder Sicke. Dabei kann die Ausnehmung 53 einstückig in die Halteeinheit 3 eingeformt sein, beispielsweise in ein den Grundkörper bildendes Strangpressprofil. Ein derartiges Strangpressprofil kann beispielsweise als Aluminiumprofil mit komplex geformtem Querschnitt kostengünstig gefertigt werden, wobei der Schlitz 32 und die Ausnehmung 53 ohne zusätzlichen Bearbeitungsaufwand bereitgestellt werden können. Die erfindungsgemäße Stützeinrichtung 5 kann ebenfalls mit geringem Aufwand in ein derartig vorgegebenes Profil integriert werden. Dies ist ein deutlicher Vorteil gegenüber dem bekannten Stand der Technik.

Aus Figuren 1 und 2 ist entnehmbar, wie die Halteeinheit 3 zur Befestigung an einer nicht dargestellten Fahrzeugkarosserie an einer Trageinheit 6, auch Konsoleneinheit genannt, angebracht werden kann, die zwei nach unten vorstehende, einander gegenüberliegende Schenkel 61 und 62 aufweist, zwischen denen die Halteeinheit 3 angeordnet ist. Die Spannachse 41 durchgreift quer zur Längsachse 23 verlaufende Langlöcher 63 in diesen Schenkeln 61 und 62, so dass die Halteeinheit 2 zur Höhenverstellung um eine Schwenkachse 64 verschwenkbar ist.

In Fixierstellung werden die Schenkel 61 und 62 reibschlüssig gegen die Halteeinheit angepresst, so dass eine kraftschlüssige Verbindung erfolgt und die Halteeinheit 2 relativ zur Trageinheit 6 fixiert ist.

### Bezugszeichenliste

- 1: Lenksäule
- 2: Stelleinheit
- 21: Mantelrohr
- 22: Lenkspindel
- 23: Längsachse
- 24: Befestigungsabschnitt
- 25: Ausgangswelle
- 3: Halteeinheit
- 31: Aufnahmeöffnung
- 32: Schlitz
- 33, 34: Wandungsabschnitte
- 35: Klemmfläche
- 4: Spanneinrichtung
- 41: Spannachse
- 42: Betätigungshebel
- 43: Drehachse
- 44: Spanngetriebe
- 5: Stützeinrichtung
- 51: Gleitfläche
- 52: Gleitkörper
- 53: Ausnehmung
- 54: Federelement
- 6: Trageinheit
- 61, 62: Schenkel
- 63: Langlöcher
- 64: Schwenkachse
- K: Klemm kraft
- S: Stützkraft
- G: Gewichtskraft

## Patentansprüche

1. Lenksäule (1) für ein Kraftfahrzeug, umfassend
eine Stelleinheit (2) mit einer in einem Mantelrohr (21) um ihre Längsachse (23) drehbar gelagerten Lenkspindel (22),
eine mit der Karosserie des Kraftfahrzeugs verbindbare Trageinheit (3), in der das Mantelrohr (21) aufnehmbar ist und die zumindest eine dem Mantelrohr (21) zugewandte Klemmfläche (35) aufweist, und
eine Spanneinrichtung (4), die in Fixierstellung die Klemmfläche (35) gegen das Mantelrohr (21) mit einer Klemmkraft (K) verspannt zur Fixierung der Stelleinheit (2) relativ zur Trageinheit (3) zumindest in Längsrichtung und die in Freigabestellung die Klemmfläche (35) von dem Mantelrohr (21) löst und eine Verstellung der Stelleinheit (2) relativ zur Trageinheit (3) zumindest in Längsrichtung freigibt, und
die Trageinheit (3) eine dem Mantelrohr (21) zugewandte Gleitfläche (51) aufweist, auf der in Freigabestellung das Mantelrohr (21) in Längsrichtung entlangbewegbar ist, **dadurch gekennzeichnet, dass** die Gleitfläche (51) an einer Stützeinrichtung (5) angeordnet ist, die die Gleitfläche (51) mit einer unabhängig von der Klemmkraft (K) vorgebbaren Stützkraft (S) gegen das Mantelrohr (21) andrückt, wobei die Stützkraft (S) im Wesentlichen größer oder gleich ist der auf die Gleitfläche (51) ausgeübten Komponente der Gewichtskraft (G) der Stelleinheit (2) einschließlich daran angebrachter Anbauteile.

2. Lenksäule (1) nach einem der vorangehenden Ansprüche, **dadurch gekennzeichnet, dass** die Gleitfläche (51) an einem Gleitkörper (52) ausgebildet ist, der zum Mantelrohr (21) hin und entgegen dazu bewegbar gelagert ist.

3. Lenksäule (1) nach einem der vorangehenden Ansprüche, **dadurch gekennzeichnet, dass** die Stützeinrichtung (5) ein Federelement (54) und/oder einen Aktuator aufweist.

4. Lenksäule (1) nach einem der Ansprüche 2 oder 3 , **dadurch gekennzeichnet, dass** der Gleitkörper (52) in einer zum Mantelrohr (21) hin offenen Ausnehmung (53) in der Trageinheit (3) angeordnet ist.

5. Lenksäule (1) nach einem der vorangehenden Ansprüche, **dadurch gekennzeichnet, dass** die Gleitfläche (51) relativ zum Mantelrohr (21) in der Trageinheit (3) flächenbündig versenkbar ist.

6. Lenksäule (1) nach einem der vorangehenden Ansprüche, **dadurch gekennzeichnet, dass** die von der Stützeinrichtung (5) auf die Gleitfläche (51) ausgeübte Stützkraft (S) gegen die Richtung einer Gewichtskraft (G) weist.

7. Lenksäule (1) nach einem der vorangehenden Ansprüche, **dadurch gekennzeichnet, dass** die Gleitfläche (51) reibungsmindernd und/oder die Klemmfläche (35) reibungserhöhend ausgestaltet ist bezüglich Reibung auf dem Mantelrohr (21).

## Claims

1. Steering column (1) for a motor vehicle, comprising an adjustment unit (2) having a steering spindle (22) which is supported in a casing pipe (21) so as to be able to be rotated about the longitudinal axis (23) thereof,
a carrier unit (3) which can be connected to the bodywork of the motor vehicle and in which the casing pipe (21) can be received and which comprises at least one clamping face (35) facing the casing pipe (21), and
a clamping device (4) which in the fixing position clamps the clamping face (35) against the casing pipe (21) with a clamping force (K) in order to fix the adjustment unit (2) relative to the carrier unit (3) at least in the longitudinal direction and which in the release position releases the clamping face (35) from the casing pipe (21) and which releases an adjustment of the adjustment unit (2) relative to the carrier unit (3) at least in the longitudinal direction, and
the carrier unit (3) comprises a sliding face (51) which faces the casing pipe (21) and along which the casing pipe (21) can be moved in the longitudinal direction in the release position, **characterized in that**
the sliding face (51) is arranged on a support device (5) which presses the sliding face (51) against the casing pipe (21) with a support force (S) which can be predetermined independently of the clamping force (K), wherein the support force (S) is substantially greater than or equal to the component of the weight force (G) of the adjustment unit (2) applied to the sliding face (51) including attachments which are fitted thereto.

2. Steering column (1) according to one of the preceding claims, **characterized in that** the sliding face (51) is formed on a sliding member (52) which is supported so as to be able to be moved toward and counter to the casing pipe (21).

3. Steering column (1) according to either of the preceding claims, **characterized in that** the support device (5) comprises a resilient element (54) and/or an actuator.

4. Steering column (1) according to either Claim 2 or 3, **characterized in that** the sliding member (52) is arranged in a recess (53) which is open in the direction toward the casing pipe (21) in the carrier unit (3).

5. Steering column (1) according to one of the preceding claims, **characterized in that** the sliding face (51) can be recessed relative to the casing pipe (21) in the carrier unit (3) in a flush-mounted manner.

6. Steering column (1) according to one of the preceding claims, **characterized in that** the support force (S) applied by the support device (5) to the sliding face (51) is directed counter to the direction of a weight force (G).

7. Steering column (1) according to one of the preceding claims, **characterized in that** the sliding face (51) is constructed in a friction-reducing manner and/or the clamping face (35) is constructed in a friction-increasing manner with respect to friction on the casing pipe (21).

## Revendications

1. Colonne de direction (1) pour un véhicule automobile, comprenant
une unité de commande (2) avec un arbre de direction (22) supporté de manière rotative autour de son axe longitudinal (23) dans un tube d'enveloppe (21),
une unité porteuse (3) pouvant être raccordée à la carrosserie du véhicule automobile, dans laquelle peut être reçu le tube d'enveloppe (21) et qui présente au moins une surface de serrage (35) tournée vers le tube d'enveloppe (21), et
un dispositif de serrage (4) qui, dans la position de fixation, serre la surface de serrage (35) contre le tube d'enveloppe (21) avec une force de serrage (K) pour la fixation de l'unité de commande (2) par rapport à l'unité porteuse (3) au moins dans la direction longitudinale et qui, dans la position de libération, libère la surface de serrage (35) du tube d'enveloppe (21) et autorise un déplacement de l'unité de commande (2) par rapport à l'unité porteuse (3) au moins dans la direction longitudinale, et
l'unité porteuse (3) présentant une surface de glissement (51) tournée vers le tube d'enveloppe (21), le long de laquelle le tube d'enveloppe (21) peut être déplacé dans la direction longitudinale dans la position de libération,
**caractérisée en ce que**
la surface de glissement (51) est disposée au niveau d'un dispositif de support (5) qui presse la surface de glissement (51) avec une force de support (S) prédéfinissable indépendamment de la force de serrage (K) contre le tube d'enveloppe (21),
la force de support (S) étant essentiellement supérieure ou égale à la composante de la force de pesanteur (G), exercée sur la surface de glissement (51), de l'unité de commande (2) avec les composants rapportés montés sur celle-ci.

2. Colonne de direction (1) selon l'une quelconque des revendications précédentes, **caractérisée en ce que** la surface de glissement (51) est réalisée au niveau d'un corps de glissement (52) qui est supporté de manière à pouvoir être déplacé vers et depuis le tube d'enveloppe (21).

3. Colonne de direction (1) selon l'une quelconque des revendications précédentes, **caractérisée en ce que** le dispositif de support (5) présente un élément de ressort (54) et/ou un actionneur.

4. Colonne de direction (1) selon l'une quelconque des revendications 2 et 3, **caractérisée en ce que** le corps de glissement (52) est disposé dans un évidement (53) ouvert vers le tube d'enveloppe (21) dans l'unité porteuse (3).

5. Colonne de direction (1) selon l'une quelconque des revendications précédentes, **caractérisée en ce que** la surface de glissement (51) peut être renfoncée en affleurement de surface par rapport au tube d'enveloppe (21) dans l'unité porteuse (3).

6. Colonne de direction (1) selon l'une quelconque des revendications précédentes, **caractérisée en ce que** la force de support (S) exercée par le dispositif de support (5) sur la surface de glissement (51) est orientée dans le sens opposé à la direction d'une force de pesanteur (G).

7. Colonne de direction (1) selon l'une quelconque des revendications précédentes, **caractérisée en ce que** la surface de glissement (51) est configurée de manière à réduire le frottement et/ou la surface de serrage (35) est configurée de manière à augmenter le frottement, par rapport à un frottement sur le tube d'enveloppe (21).
